# EUROPÄISCHE PATENTSCHRIFT

(11) **EP 2 057 607 B1**
(45) Veröffentlichungstag und Bekanntmachung des Hinweises auf die Patenterteilung: **13.08.2014**
(21) Anmeldenummer: 07764854.1
(22) Anmeldetag: 26.06.2007
(51) Int. Cl.: G07C 5/00, B60T 8/88, B60T 17/22, B60R 25/00

(54) **NUTZFAHRZEUGANHÄNGER MIT EINEM ELEKTRONISCH GESTEUERTEN BREMSSYSTEM**
COMMERCIAL VEHICLE TRAILER WITH AN ELECTRONICALLY CONTROLLED BRAKING SYSTEM
REMORQUE POUR VEHICULE UTILITAIRE COMPRENANT UN SYSTEME DE FREINAGE A COMMANDE ELECTRONIQUE

(30) Priorität: 24.08.2006 DE 10603976
(43) Veröffentlichungstag der Anmeldung: 13.05.2009
(73) Patentinhaber: WABCO GmbH, 30453 Hannover (DE)
(72) Erfinder: BARLSEN, Holger, 30851 Langenhagen (DE); RISSE, Rainer, 30982 Pattensen-Reden (DE); STENDER, Axel, 31787 Hameln (DE)
(74) Vertreter: Lauerwald, Jörg
(86) Internationale Anmeldenummer: PCT/EP2007/005628
(87) Internationale Veröffentlichungsnummer: WO 2008/022665

(56) Entgegenhaltungen:
- DE-A1- 19 707 207
- FR-A1- 2 791 432
- US-A1- 2005 067 886
- US-A1- 2006 033 382
- US-B1- 6 195 602
- US-B1- 6 438 481

## Beschreibung

Die Erfindung betrifft einen Nutzfahrzeuganhänger mit einem elektronisch gesteuerten Bremssystem gemäß Patentanspruch 1, ein Verfahren zur Speicherung fahrzeugspezifischer Daten eines solchen Nutzfahrzeuganhängers gemäß Patentanspruch 2 und ein Computerprogramm gemäß Anspruch 15.

Das elektronisch gesteuerte Bremssystem derartiger Nutzfahrzeuganhänger ist über einen in einem elektronischen Steuergerät vorgesehenen Parameterspeicher auf bestimmte Konfigurationen des Nutzfahrzeuganhängers variabel einstellbar, beispielsweise auf die Anzahl der gebremsten Achsen oder das Vorhandensein von Zusatzeinrichtungen wie etwa einer Reifendrucküberwachung oder einer Luftfederung. Bei der Herstellung, der Inbetriebnahme oder der Reparatur derartiger Nutzfahrzeuganhänger ist es daher erforderlich, die Konfiguration charakterisierende fahrzeugspezifische Daten in den Parameterspeicher einzuspeichern, wobei es wichtig ist, dass die für den jeweiligen Nutzfahrzeuganhänger passenden Daten ausgewählt werden. Hierfür ist es bekannt, auf einem Computer eine Mehrzahl von Parameter-Datensätzen für verschiedene Konfigurationen von Nutzfahrzeuganhängern vorzuhalten und bei der Herstellung, der Inbetriebnahme oder Reparatur manuell den passenden Parameter-Datensatz auszuwählen und in dem Parameterspeicher einzuspeichern. Hierbei kann es vorkommen, dass aufgrund von Unachtsamkeit ein ungeeigneter Parameter-Datensatz ausgewählt wird, insbesondere wenn eine große Anzahl von Parameter-Datensätzen zur Auswahl vorgehalten wird.

Aus der DE 197 07 207 A1 ist weiterhin bekannt, das Steuergerät eines elektrisch steuerbaren Bremssystems mit einem nichtflüchtigen Speicher sowie einem Anschluss für eine Barcode-Leseeinrichtung zu versehen. Mittels der Barcode-Leseeinrichtung sind Daten von Zuordnungsfunktionen zwischen einem Sollverzögerungssignal und dem auszusteuernden Bremsdruck einzuspeichern.

Aus der US 6,438,481 B1 geht ein Verfahren hervor, mit dem ein "performance trim set" in einer Fahrzeugsteuerung ausgewählt und fortan für eine Regelung verwendet wird.

Aus der FR 2 791 432 A1 geht eine Prüfung eines Antiblockiersystems in einem Fahrzeug hervor, insbesondere im Prozess der Herstellung des Fahrzeuges.

Hiervon ausgehend ist es Aufgabe der Erfindung, bei der Herstellung, der Inbetriebnahme oder der Reparatur eines Nutzfahrzeuganhängers das Einspeichern fahrzeugspezifischer Daten weniger fehleranfällig zu gestalten.

Diese Aufgabe wird durch die in den Patentansprüchen 1, 2 und 15 angegebenen Ausgestaltungen der Erfindung gelöst. Vorteilhafte Weiterbildungen der Erfindung sind in den Unteransprüchen angegeben.

Die Erfindung hat den Vorteil, durch Zuordnung eines Informationsmittels, welches die fahrzeugspezifischen Daten charakterisiert, zu dem Nutzfahrzeug eine Fehlbedienung praktisch auszuschließen und damit den Einspeichervorgang der fahrzeugspezifischen Daten erheblich sicherer zu gestalten. Zu diesem Zweck ist das Informationsmittel an dem Nutzfahrzeuganhänger vorteilhaft in einer Weise angebracht, die eine sichere Zuordnung der fahrzeugspezifischen Daten zu dem Nutzfahrzeuganhänger erlaubt. Beispielsweise kann das Informationsmittel als Aufkleber oder als Metallplatte ausgebildet sein. Das Informationsmittel kann dabei temporär oder permanent an dem Nutzfahrzeuganhänger angebracht sein. Eine temporäre Anbringung ist insbesondere dann vorteilhaft, wenn die Informationen des Informationsmittels nur beim Herstellvorgang bzw. bei der sich an den Herstellvorgang anschließenden Inbetriebnahme des Nutzfahrzeuganhängers beim Hersteller benötigt werden. In diesem Fall kann das Informationsmittel nach Abschluss des Herstellvorgangs bzw. der Inbetriebnahme entfernt werden.

Sofern das Informationsmittel auch beim späteren Betrieb des Nutzfahrzeuganhängers benötigt wird, etwa für Reparaturzwecke, ist es vorteilhaft, das Informationsmittel an dem Nutzfahrzeuganhänger in einer Weise anzubringen, die eine Manipulation bzw. einen Austausch des Informationsmittels verhindert oder zumindest erheblich erschwert. Das Informationsmittel kann hierzu beispielsweise durch nicht zerstörungsfrei lösbare Befestigungsmittel, etwa Niete, an dem Nutzfahrzeuganhängers angebracht sein. Ebenfalls vorteilhaft ist die Anbringung des Informationsmittels per Clip-Befestigung oder mittels Anschweißen.

Die Anbringung des Informationsmittels erfolgt vorteilhaft am Rahmen oder dem Heck des Nutzfahrzeuganhängers, z. B. in der Nähe von Bedienelementen für die Luftfederung oder die Parkbremse des Nutzfahrzeuganhängers.

Gegenüber DE 197 07 207 A1 ergibt sich der Vorteil, dass das Steuergerät eines elektrisch steuerbaren Bremssystems um einen Anschluss für eine Barcode-Leseeinrichtung sowie die zum Betrieb notwendige Betriebssoftware erweitert werden muss. Stattdessen kann die vorliegende Erfindung auch bei vorhandenen Steuergeräten ohne Änderungen daran vorteilhaft eingesetzt werden.

Die Erfindung wird nachfolgend unter Verwendung einer Zeichnung anhand von Ausführungsbeispielen näher erläutert.

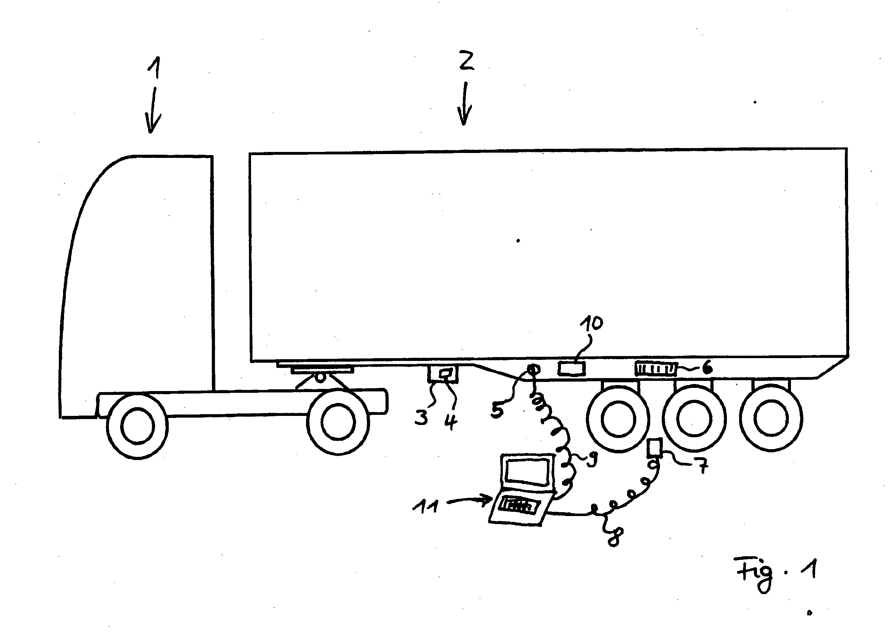

Fig. 1 zeigt einen Fahrzeugzug mit einer Zugmaschine 1 und einem Nutzfahrzeuganhänger 2 in schematisierter Darstellung.

Der Nutzfahrzeuganhänger (2) ist mit einem elektronisch gesteuerten Bremssystem versehen, von dem in der Fig. 1 ein elektronisches Steuergerät (3) dargestellt ist, das zur Steuerung des Bremssystem dient. Das elektronische Steuergerät (3) weist einen Parameterspeicher (4) auf, der wenigstens einen Speicherbereich aufweist, in dem fahrzeugspezifische Daten speicherbar sind. Fahrzeugspezifische Daten können beispielsweise Einstell-Parameter des elektronisch gesteuerten Bremssystems sein, wie die Konfiguration des Nutzfahrzeuganhängers, z. B. die Anzahl der gebremsten Achsen, eine Bremskraftverteilungsfunktion oder die Steuerung von Zusatzfunktionen wie etwa einer Liftachse. Derartige fahrzeugspezifische Daten werden von dem elektronischen Steuergerät (3) zur Steuerung der Bremsfunktion und etwaiger Zusatzfunktionen des Nutzfahrzeuganhängers verwendet.

Das elektronische Steuergerät (3) weist eine Schnittstelle zu einem externen Rechner auf. Die Schnittstelle ist in der Fig. 1 als elektrischer Steckanschluss (5) dargestellt, der über eine elektrische Leitung mit dem elektronischen Steuergerät (3) verbunden ist. An den Steckverbinder (5) ist über eine elektrische Leitung (9) ein externer Rechner (11) angeschlossen. Der externe Rechner (11) kann beispielsweise als handelsüblicher Personal Computer oder Laptop ausgebildet sein. Es kann sich auch um ein Diagnosegerät für die Fahrzeugdiagnose handeln. Auf dem Rechner (11) ist eine Anwendungssoftware sowie eine Mehrzahl von Parameter-Datensätzen für verschiedene Konfigurationen von Nutzfahrzeuganhängern gespeichert. Die Anwendungssoftware ist derart programmiert, dass durch manuelle Auswahl aus der Mehrzahl von Parameter-Datensätzen der für den Nutzfahrzeuganhänger (2) geeignete Parameter-Datensatz, der die für den Nutzfahrzeuganhänger (2) geeigneten fahrzeugspezifischen Daten aufweist, ausgewählt werden kann und über die Leitung (9) sowie die Schnittstelle in dem Parameterspeicher (4) des elektronischen Steuergeräts (3) gespeichert werden kann.

Der Rechner (11) ist weiterhin zum Anschluss eines Lesegeräts (7) ausgebildet, welches gemäß Fig. 1 über eine elektrische Leitung (8) an den Rechner (11) angeschlossen ist. Das Lesegerät (7) ist zum Auslesen eines an dem Nutzfahrzeuganhänger (2) angebrachten Informationsmittels (6) ausgebildet. Das Informationsmittel (6) kann z. B. als Aufkleber oder als Metallplatte ausgebildet sein. Das Informationsmittel (6) weist eine Information auf, welche die fahrzeugspezifischen Daten des Nutzfahrzeuganhängers (2) charakterisiert. Hierzu kann das Informationsmittel (6) vorteilhaft eine optisch lesbare Information, insbesondere einen Barcode oder eine Klartext-Information wie z.B. die Fahrgestellnummer des Nutzfahrzeuganhänger (2), aufweisen. In diesem Fall ist das Lesegerät vorteilhaft als Barcode-Leser oder als Scanner ausgebildet.

Das Informationsmittel (6) kann vorteilhaft auch ein drahtgebunden kontaktierbares Speichermittel, insbesondere einen Speicherchip, aufweisen. In diesem Fall ist das Lesegerät (7) mit entsprechenden Anschlusskontakten zur elektrischen Kontaktierung des Speichermittels versehen.

Das Informationsmittel kann vorteilhaft auch ein per Funksignal lesbares Speichermittel, insbesondere einen RFID-Chip (Remote Frequency Identification), aufweisen. In diesem Fall ist das Lesegerät (7) mit einem RFID-Detektor versehen.

Vorteilhaft ist auch eine Kombination der zuvor genannten Informationen bzw. Speichermittel in dem einen Informationsmittel (6). In einer weiteren vorteilhaften Ausgestaltung besteht das Informationsmittel (6) aus mehreren, an verschiedenen Stellen des Nutzfahrzeuganhängers (2) angebrachten Teil-Informationsmitteln, etwa einer die Fahrgestellnummer enthaltenden Plakette sowie einem eine Barcode-Information enthaltenden Aufkleber.

Weiterhin ist der Nutzfahrzeuganhänger (2) mit einer Bedieneinrichtung (10) versehen, mittels der verschiedene Funktionen des Nutzfahrzeuganhängers (2), etwa die Niveauverstellung, manuell beeinflusst werden können. Das Bediengerät (10) ist über elektrische Verbindungen mit dem elektronischen Steuergerät (3) sowie mit eventuell weiteren vorhandenen Steuergeräten in dem Nutzfahrzeuganhänger (2) zum Datenaustausch verbunden.

Die auf dem Rechner (11) vorgesehene Anwendungssoftware verkörpert in vorteilhafter Weise ein erfindungsgemäßes Verfahren zur Speicherung fahrzeugspezifischer Daten des zuvor beschriebenen Nutzfahrzeuganhängers in dem Parameterspeicher (4) des elektronischen Steuergeräts (3), welches folgende Schritte aufweist:
a) Von dem Rechner (11) werden mittels eines an den Rechner (11) angeschlossenen Lesegeräts (7) Informationen von wenigstens einem an dem Nutzfahrzeuganhänger (2) angebrachten Informationsmittel (6) gelesen,
b) aufgrund der gelesenen Informationen ermittelt der Rechner (11) die fahrzeugspezifischen Daten,
c) der Rechner (11) überträgt die fahrzeugspezifischen Daten über eine Schnittstelle an das elektronische Steuergerät (3),
d) das elektronische Steuergerät (3) speichert die fahrzeugspezifischen Daten in dem Parameter-Speicher (4).

## Patentansprüche

1. Nutzfahrzeuganhänger (2) mit einem elektronisch gesteuerten Bremssystem, wobei das elektronisch gesteuerte Bremssystem ein elektronisches Steuergerät (3) aufweist, welches einen Parameterspeicher (4) aufweist, der wenigstens einen Speicherbereich aufweist, in dem fahrzeugspezifische Daten speicherbar sind, und wobei das elektronische Steuergerät (3) das elektronisch gesteuerte Bremssystem unter Verwendung der fahrzeugspezifischen Daten steuert, und wobei das elektronische Steuergerät (3) eine Schnittstelle zu einem externen Rechner (11) aufweist, und wobei an dem Nutzfahrzeuganhänger (2) wenigstens ein Informationsmittel (6) angebracht ist, welches die fahrzeugspezifischen Daten charakterisiert, und die fahrzeugspezifischen Daten mittels des Rechners (11) durch Lesen des Informationsmittels (6) mittels eines an den Rechner (11) anschließbaren Lesegeräts (7) ermittelbar und über die Schnittstelle in dem Parameterspeicher (4) speicherbar sind.

2. Verfahren zur Speicherung fahrzeugspezifischer Daten eines mit einem elektronisch gesteuerten Bremssystem versehenen Nutzfahrzeuganhängers (2), wobei das elektronisch gesteuerte Bremssystem ein elektronisches Steuergerät (3) aufweist, welches einen Parameterspeicher (4) aufweist, der wenigstens einen Speicherbereich aufweist, in dem die fahrzeugspezifischen Daten speicherbar sind, und wobei das elektronische Steuergerät (3) das elektronisch gesteuerte Bremssystem unter Verwendung der fahrzeugspezifischen Daten steuert, und wobei das elektronische Steuergerät (3) eine Schnittstelle zu einem externen Rechner (11) aufweist, mit folgenden Schritten:
a) von dem externen Rechner (11) werden mittels eines an dem externen Rechner (11) angeschlossenen Lesegeräts (7) Informationen von wenigstens einem an dem Nutzfahrzeuganhänger (2) angebrachten Informationsmittel (6) gelesen,
b) aufgrund der gelesenen Informationen ermittelt der externe Rechner (11) die fahrzeugspezifischen Daten,
c) der externe Rechner (11) überträgt die fahr-zeugspezifischen Daten über die Schnittstelle an das elektronische Steuergerät (3),
d) das elektronische Steuergerät (3) speichert die fahrzeugspezifischen Daten in dem Parameterspeicher (4).

3. Nutzfahrzeuganhänger oder Verfahren nach wenigstens einem der vorhergehenden Ansprüche, **dadurch gekennzeichnet, dass** das Informationsmittel (6) eine Referenz zu einem für den Nutzfahrzeuganhänger (2) vorgesehenen spezifischen Parameter-Datensatz aufweist, der die fahrzeugspezifischen Daten beinhaltet.

4. Nutzfahrzeuganhänger oder Verfahren nach wenigstens einem der Ansprüche 1 bis 2, **dadurch gekennzeichnet, dass** das Informationsmittel (6) die fahrzeugspezifischen Daten unmittelbar enthält.

5. Nutzfahrzeuganhänger oder Verfahren nach wenigstens einem der vorhergehenden Ansprüche, **dadurch gekennzeichnet, dass** das Informationsmittel (6) als Metallplatte ausgebildet ist.

6. Nutzfahrzeuganhänger oder Verfahren nach wenigstens einem der Ansprüche 1 bis 4, **dadurch gekennzeichnet, dass** das Informationsmittel (6) als Aufkleber ausgebildet ist.

7. Nutzfahrzeuganhänger oder Verfahren nach wenigstens einem der vorhergehenden Ansprüche, **dadurch gekennzeichnet, dass** das Informationsmittel (6) eine optisch lesbare Information, insbesondere einen Barcode oder eine Klartext-Information, aufweist.

8. Nutzfahrzeuganhänger oder Verfahren nach wenigstens einem der vorhergehenden Ansprüche, **dadurch gekennzeichnet, dass** das Informationsmittel (6) ein drahtgebunden kontaktierbares Speichermittel, insbesondere einen Speicherchip, aufweist.

9. Nutzfahrzeuganhänger oder Verfahren nach wenigstens einem der vorhergehenden Ansprüche, **dadurch gekennzeichnet, dass** das Informationsmittel (6) ein per Funksignal lesbares Speichermittel, insbesondere einen RFID-Chip, aufweist.

10. Nutzfahrzeuganhänger oder Verfahren nach wenigstens einem der vorhergehenden Ansprüche, **dadurch gekennzeichnet, dass** das Informationsmittel (6) eine Parameter-Datensatzkennung aufweist.

11. Nutzfahrzeuganhänger oder Verfahren nach wenigstens einem der vorhergehenden Ansprüche, **dadurch gekennzeichnet, dass** das Informationsmittel (6) eine anhängerspezifische Kennung aufweist.

12. Nutzfahrzeuganhänger oder Verfahren nach wenigstens einem der vorhergehenden Ansprüche, **dadurch gekennzeichnet, dass** das Informationsmittel (6) eine Fahrgestellnummer des Nutzfahrzeuganhängers (2) aufweist.

13. Nutzfahrzeuganhänger oder Verfahren nach wenigstens einem der vorhergehenden Ansprüche, **dadurch gekennzeichnet, dass** unter Verwendung von Informationen des Informationsmittels (6) automatisch aus einer Mehrzahl von Parameter-Datensätzen der für den angeschlossenen Nutzfahrzeuganhänger (6) geeignete Parameter-Datensatz ausgewählt und in dem Parameterspeicher (4) gespeichert wird.

14. Nutzfahrzeuganhänger oder Verfahren nach Anspruch 13, **dadurch gekennzeichnet, dass** die Auswahl des geeigneten Parameter-Datensatzes zusätzlich durch Verknüpfung mit der vom Informationsmittel (6) ausgelesenen Fahrgestellnummer des Nutzfahrzeuganhängers (2) erfolgt.

15. Computerprogramm zur Ausführung eines Verfahrens nach wenigstens einem der vorhergehenden Ansprüche.

## Claims

1. Utility vehicle trailer (2) having an electronically controlled brake system, wherein the electronically controlled brake system has an electronic control unit (3) which has a parameter memory (4) which has at least one memory area in which vehicle-specific data can be stored, and wherein the electronic control unit (3) controls the electronically controlled brake system by using the vehicle-specific data, and wherein the electronic control unit (3) has an interface with an external computer (11), and wherein at least one information means (6) is provided on the utility vehicle trailer (2), which information means (6) characterizes the vehicle-specific data, and the vehicle-specific data can be determined by means of the computer (11) by reading the information means (6) by means of a reading unit (7) which can be connected to the computer (11), and the vehicle-specific data can be stored in the parameter memory (4) via the interface.

2. Method for storing vehicle-specific data of a utility vehicle trailer (2) which is provided with an electronically controlled brake system, wherein the electronically controlled brake system has an electronic control unit (3) which has a parameter memory (4) which has at least one memory area in which vehicle-specific data can be stored, and wherein the electronic control unit (3) controls the electronically controlled brake system by using the vehicle-specific data, and wherein the electronic control unit (3) has an interface with an external computer (11), having the following steps:
a) information is read from at least one information, means (6), provided on the utility vehicle trailer (2), by the external computer (11) by means of a reading unit (7) which is connected to the external computer (11),
b) the external computer (11) determines the vehicle-specific data on the basis of the information which is read,
c) the external computer (11) transmits the vehicle-specific data to the electronic control unit (3) via the interface,
d) the electronic control unit (3) stores the vehicle-specific data in the parameter memory (4).

3. Utility vehicle trailer or method according to at least one of the preceding claims, **characterized in that** the information' means (6) includes a reference to a specific parameter data record which is provided for the utility vehicle trailer (2) and contains the vehicle-specific data.

4. Utility vehicle trailer or method according to at least one of Claims 1 to 2, **characterized in that** the information means (6) directly contains the vehicle-specific data.

5. Utility vehicle trailer or method according to at least one of the preceding claims, **characterized in that** the information means (6) is embodied as a metal plate.

6. Utility vehicle trailer or method according to at least one of Claims 1 to 4, **characterized in that** the information means (6) is embodied as a sticker.

7. Utility vehicle trailer or method according to at least one of the preceding claims, **characterized in that** the information means (6) has visually readable information, in particular a bar code or plain text information.

8. Utility vehicle trailer or method according to at least one of the preceding claims, **characterized in that** the information means (6) has a wire-bound, contactable storage means, in particular a memory chip.

9. Utility vehicle trailer or method according to at least one of the preceding claims, **characterized in that** the information means (6) has a storage means which can be read by radio signal, in particular an RFID chip.

10. Utility vehicle trailer or method according to at least one of the preceding claims, **characterized in that** the information means (6) has a parameter data record identifier.

11. Utility vehicle trailer or method according to at least one of the preceding claims, **characterized in that** the information means (6) has a trailer-specific identifier.

12. Utility vehicle trailer or method according to at least one of the preceding claims, **characterized in that** the information means (6) has a chassis number of the utility vehicle trailer (2).

13. Utility vehicle trailer or method according to at least one of the preceding claims, **characterized in that** the parameter data record which is suitable for the connected utility vehicle trailer (2) is selected automatically from a plurality of parameter data records using information from the information means (6) and is stored in the parameter memory (4).

14. Utility vehicle trailer or method according to Claim 13, **characterized in that** the selection of the suitable parameter data record is additionally carried out by combination with the chassis number, read out from the information means (6), of the utility vehicle trailer (2).

15. Computer program for carrying out a method according to at least one of the preceding claims.

## Revendications

1. Remorque de véhicule utilitaire (2) possédant un système de freinage à commande électronique, dans lequel le système de freinage à commande électronique comporte un appareil de commande électronique (3) qui comporte une mémoire de paramètres (4) ayant au moins une zone de mémoire dans laquelle des données spécifiques au véhicule peuvent être stockées, et dans lequel l'appareil de commande électronique (3) commande le système de freinage à commande électronique en utilisant les données spécifiques au véhicule, et dans lequel l'appareil électronique (3) comporte une interface avec un ordinateur externe (11), et dans lequel au moins un moyen d'information (6) est monté sur la remorque du véhicule utilitaire (2), lequel moyen d'information caractérise les données spécifiques au véhicule, et les données spécifiques au véhicule peuvent être déterminées au moyen de l'ordinateur (11) par lecture du moyen d'informations (6) au moyen d'un appareil de lecture (7) pouvant être connecté à l'ordinateur (11) et peuvent être stockées dans la mémoire de paramètres (4) par l'intermédiaire de l'interface.

2. Procédé de stockage de données spécifiques à un véhicule d'une remorque de véhicule utilitaire (2) munie d'un système de freinage à commande électronique, dans lequel le système de freinage à commande électronique comporte un appareil de commande électronique (3) qui comporte une mémoire de paramètres (4) présentant au moins une zone de mémoire dans laquelle des données spécifiques au véhicule peuvent être stockées, et dans lequel l'appareil de commande électronique (3) commande le système de freinage à commande électronique en utilisant les données spécifiques au véhicule, et dans lequel l'appareil de commande électronique (3) comporte une interface avec un ordinateur externe (11), comprenant les étapes suivantes :
a) des informations d'au moins un moyen d'information (6) monté sur la remorque de véhicule utilitaire (2) sont lues par l'ordinateur externe (11) au moyen d'un appareil de lecture (7) connecté à l'ordinateur externe (11),
b) sur la base des informations lues, l'ordinateur externe (11) détermine les données spécifiques au véhicule,
c) l'ordinateur externe (11) transmet les données spécifiques au véhicule par l'intermédiaire de l'interface à l'appareil de commande électronique (3),
d) l'appareil de commande électronique (3) stocke les données spécifiques au véhicule dans la mémoire de paramètres (4).

3. Remorque de véhicule utilitaire ou procédé selon au moins l'une des revendications précédentes, **caractérisé en ce que** le moyen d'information (6) comprend une référence à un enregistrement de données de paramètres spécifique prévu pour la remorque de véhicule utilitaire (2).

4. Remorque de véhicule utilitaire ou procédé selon au moins l'une des revendications 1 à 2, **caractérisé en ce que** le moyen d'information (6) contient directement les données spécifiques au véhicule.

5. Remorque de véhicule utilitaire ou procédé selon au moins l'une des revendications précédentes, **caractérisé en ce que** le moyen d'information (6) est réalisé sous la forme d'une plaque métallique.

6. Remorque de véhicule utilitaire ou procédé selon au moins l'une des revendications 1 à 4, **caractérisé en ce que** le moyen d'information (6) est réalisé sous la forme d'un autocollant.

7. Remorque de véhicule utilitaire ou procédé selon au moins l'une des revendications précédentes, **caractérisé en ce que** le moyen d'information (6) comporte des informations lisibles optiquement, notamment un code à barres ou une information en texte clair.

8. Remorque de véhicule utilitaire ou procédé selon au moins l'une des revendications précédentes, **caractérisé en ce que** le moyen d'information (6) comporte un moyen de stockage pouvant être mis en contact par connexion filaire, notamment une puce de stockage.

9. Remorque de véhicule utilitaire ou procédé selon au moins l'une des revendications précédentes, **caractérisé en ce que** le moyen d'information (6) comporte un moyen de stockage lisible par signal radio, notamment une puce RFID.

10. Remorque de véhicule utilitaire ou procédé selon au moins l'une des revendications précédentes, **caractérisé en ce que** le moyen d'information (6) comporte un identifiant d'enregistrement de données de paramètres.

11. Remorque de véhicule utilitaire ou procédé selon au moins l'une des revendications précédentes, **caractérisé en ce que** le moyen d'information (6) comporte un identifiant spécifique à la remorque.

12. Remorque de véhicule utilitaire ou procédé selon au moins l'une des revendications précédentes, **caractérisé en ce que** le moyen d'information (6) comporte un numéro de châssis de la remorque de véhicule utilitaire (2).

13. Remorque de véhicule utilitaire ou procédé selon au moins l'une des revendications précédentes, **caractérisé en ce qu'**en utilisant automatiquement des informations du moyen d'information (6) provenant d'une pluralité d'enregistrements de données de paramètres, l'enregistrement de données de paramètres approprié pour la remorque de véhicule utilitaire (2) raccordée est sélectionné et est stocké dans la mémoire de paramètres (4).

14. Remorque de véhicule utilitaire ou procédé selon la revendication 13, **caractérisé en ce que** la sélection de l'enregistrement de données de paramètres approprié s'effectue en outre par association avec le numéro de châssis lu à partir du moyen d'information (6) de la remorque de véhicule utilitaire (2).

15. Programme informatique destinée à mettre en oeuvre un procédé selon au moins l'une des revendications précédentes.
